# EUROPÄISCHE PATENTSCHRIFT

(11) **EP 0 570 387 B1**
(45) Veröffentlichungstag und Bekanntmachung des Hinweises auf die Patenterteilung: **21.12.1994**
(21) Anmeldenummer: 92902131.9
(22) Anmeldetag: 16.01.1992
(51) Int. Cl.: B29B 7/42, C08L 83/04

(54) **VERFAHREN ZUR KONTINUIERLICHEN HERSTELLUNG VON HTV-SILICONMASSEN**
PROCESS FOR THE CONTINUOUS PRODUCTION OF HTV SILICONE COMPOUNDS
PROCEDE DE PRODUCTION EN CONTINU DE MELANGES SILICONES A HAUTE TEMPERATURE DE VULCANISATION

(30) Priorität: 07.02.1991 DE 4103602
(43) Veröffentlichungstag der Anmeldung: 24.11.1993
(73) Patentinhaber: WACKER-CHEMIE GMBH, D-81737 München (DE)
(72) Erfinder: HEISLER, Manfred, D-8261 Emmerting (DE); STARY, Fridolin, D-8263 Burghausen (DE); RATKA, Rudolf, D-8263 Burghausen (DE); SCHLIERF, Alois, D-8263 Burghausen (DE)
(86) Internationale Anmeldenummer: EP9200080
(87) Internationale Veröffentlichungsnummer: WO9213694

(56) Entgegenhaltungen:
- EP-A- 0 258 159
- CH-A- 536 655
- US-A- 3 572 647
- US-A- 3 618 903
- US-A- 4 164 491
- Japanese Patents Abstracts Unexamined, Sektion Chemical, Woche 8915, 24. Mai 1989, Klasse A26, Seite 16, Accession Nr.89-110667/15, Derwent Publications Ltd, (London,GB),& JP,A,1056736 (SHINETSU CHEM.IND.K.K) 3 März 1989

## Beschreibung

Die Erfindung betrifft ein Verfahren zur kontinuierlichen Herstellung von heißvulkanisierenden Siliconmassen auf der Basis von Diorgano(poly)siloxanen, die in der Fachwelt, als (High Temperature Vulcanizing) HTV-Siliconmassen bezeichnet werden. Diese HTV-Siliconmassen unterscheiden sich hinsichtlich der Temperatur während des Vulkanisierungsvorgangs von den (Room Temperature Vulcanizing) RTV-Siliconmassen. Während die HTV-Siliconmassen erst bei gegenüber Raumtemperatur erhöhter Temperatur über eine Radikalreaktion bzw. Additionsreaktion vulkanisieren, erfolgt die Vulkanisation bei Einkomponenten-RTV-Siliconmassen über eine Kondensationsreaktion mit Luftfeuchtigkeit, d.h. Wasser, bereits bei Raumtemperatur. Einkomponenten-RTV-Siliconmassen weisen verstärkende Füllstoffe in Mengen von maximal 10 Gew.-% auf. Demgegenüber ist der Gehalt an verstärkendem Füllstoff bei HTV-Siliconmassen zumindest 20 Gew.-%. US-A-4,164,491 offenbart ein Verfahren zur Herstellung von HTV-Siliconmassen, wobei 100 Teile Diorganopolysiloxan Kautschuk z.B. mit zumindest 20 Teilen feinteiligem Siliciumdioxid vermischt und homogenisiert werden. Zur Unterscheidung zwischen HTV-und RTV-Siliconmassen sei beispielsweise auch auf Winnacker, Küchler, Band 6, Anorganische Technologie II, 4. Auflage, 1982, Carl Hanser Verlag München Wien, Seiten 842 und 845, J. Bittera, Kautschuk, Gummi, Kunststoffe, 39. Jahrgang Nr. 1/86 oder J.C. Weis in Progress of Rubber Technology, edited by S.H. Morell, Elsevier Applied Science Publishers, Ltd., England, 1984 Seiten 85 - 106 verwiesen.

Gemäß der EP-A-234226 bzw. der entsprechenden US-4737561 ist ein Verfahren zur kontinuierlichen Herstellung von Einkomponenten-RTV-Siliconmassen bekannt, bei dem man in einem ersten Schritt zu vernetzendes Diorgano(poly)siloxan, Füllstoff(e) und eventuell entweder Katalysator(en) oder Vernetzer und eventuell einen Teil oder alle gegebenenfalls zu verwendenden Hilfsstoffe in einem kontinuierlich arbeitenden geschlossenen Mischer vereinigt und in einem zweiten Schritt in einem oszillierenden Pilgerschrittkneter der so erhaltenen Masse die nicht im ersten Schritt zugegebenen Vernetzer und/oder Katalysator(en) sowie den Rest der gegebenenfalls zu verwendenden Hilfsstoffe zudosiert und die Masse in diesem Kneter homogenisiert und entgast.

HTV-Siliconmassen unterscheiden sich vor allem in folgenden Punkten von RTV-Siliconmassen:
- wesentlich höheres Viskositätsniveau der eingesetzten Polymere bei HTV-Massen
- unterschiedliche Vernetzungsart:
   - HTV:: Peroxide
   - RTV:: trifunkionelle Silane
- unterschiedliche Strukturverbesserer:
   - HTV:: Siloxandiole
   - RTV:: Siliconöle
- Konsistenz der erhaltenen Massen:
   - HTV:: Festkautschuk
   - RTV:: pastös
Diese unterschiedliche Konsistenz ist schon aus den unterschiedlichen Methoden zur Viskositätsmessung ersichtlich. So werden bei HTV-Massen die in der kautschukverarbeitenden Industrie gebräuchlichen Mooney-Viskosimeter eingesetzt, wogegen bei RTV-Massen Rotationsviskosimeter und Auspreßgeräte verwendet werden.

Deshalb werden HTV-Siliconmassen nach derzeitigem Stand der Technik fast ausschließlich diskontinuierlich in Knetern, Innenmischern oder Mischwalzwerken durch Vermischen der Einsatzstoffe hergestellt.

Gemäß der EP-B-258159 ist ein Verfahren zur kontinuierlichen Herstellung von Muttermischungen in Form homogener und dicker Pasten bekannt, um später heißvulkanisierbare Silicon-Elastomere zu erhalten, wobei ein Endlos-Doppelschneckenkneter mit einem Polysiloxanbasispolymer und einer pulverigen Charge beschickt wird. Vorzugsweise ist die pulverige Charge Siliciumdioxid mit einer Dichte oberhalb 0,1 kg/l.

Nachteiligerweise resultieren bei diesem Verfahren wegen des wechselnden Einzugsverhaltens zeitlich nicht konstante Produkteigenschaften. Um eine positive Stippenbeurteilung zu erreichen, sind lange Mischzonen nötig, was zwangsläufig zu erhöhtem apparativem Aufwand und erhöhten Verweildauern führt. Außerdem besteht die Gefahr eines großen Maschinen-verschleisses und einer Produktverunreinigung durch Metallabrieb.

Aufgabe der Erfindung ist es, ein Verfahren zur kontinuierlichen Herstellung von HTV-Siliconmassen bereitzustellen, das die Nachteile des Standes der Technik vermeidet.

Gelöst wird diese Aufgabe durch ein Verfahren zur kontinuierlichen Herstellung von HTV-Siliconmassen, dadurch gekennzeichnet, daß in einem oszillierenden Einwellenpilgerschrittkneter 100 Gewichtsteile Diorgano(poly)siloxan, das bei 25° C eine Viskosität von 50 bis 100 000 Pas aufweist, mit zumindest 20 Gewichtsteilen feinteiligem Siliciumdioxid, das eine Stampfdichte oberhalb 0,01 kg/l aufweist, vermischt und homogenisiert werden.

Gemäß dem erfindungsgemäßen Verfahren ist es möglich HTV-Siliconmassen mit positiven Produkteigenschaften wie homogenes und transparentes Aussehen, guter Stippenbeurteilung, konstanter Mooneyviskosität und konstanter Shore Härte A zu erhalten.

Im erfindungsgemäßen Verfahren können alle diejenigen Rezepturen für HTV-Siliconmassen, die bisher diskontinuierlich verarbeitet wurden kontinuierlich verarbeitet werden. Eine Übersicht derartiger Rezepturen ist in Chemistry and Technology of Silicones, W. Noll, Academic Press, Inc, Orlando, USA, Seiten 400 bis 407 gegeben, worauf in diesem Zusammenhang ausdrücklich verwiesen wird.
Die HTV-Siliconmassen können neben Diorgano(poly)siloxanen und feinteiligem Siliciumdioxid weitere Füllstoffe, Strukturverbesserer, Peroxide und ggf. Additive, wie beispielsweise Heißluftstabilisatoren, Flammschutzmittel und Pigmente, enthalten.

Die erhaltenen, unvernetzten HTV-Siliconmassen weisen vorzugsweise eine Mooney-Viskosität (DIN 53523) von 15 bis 130 Mooney-Einheiten (Mooney-Endwert, ML (1+4), 23° C) auf, woraus nach Vernetzung mit Peroxiden und anschließender Temperung Elastomere der Shore-Härte A (DIN 53505) von vorzugsweise 15 bis 110, insbesondere 15 bis 95 resultieren.

Erfindungsgemäß werden Diorgano(poly)siloxane mit einer Viskosität bei 25 °C von 50 bis 100 000 Pas, vorzugsweise 500 bis 50000 Pas verwendet.

Die Organoreste in den erfindungsgemäß eingesetzten Diorgano(poly)siloxanen sind vorzugsweise Methyl-, Vinyl-, Phenyl- und/oder Trifluoralkylreste. Ein bevorzugter Trifluoralkylrest ist der 3,3,3 Trifluorpropylrest. Sind in den Ketten der Diorgano(poly)siloxane neben Metyhl- und/oder Trifluoralkylresten Vinyl- und/oder Phenylreste vorhanden, so ist ein bevorzugter Mengenbereich für diese Reste 0,001 - 30 Mol-%, insbesondere 0,001 - 25 Mol-%.

Vorzugsweise werden mit Trimethyl-, Dimethylvinyl-, Methyldivinyl- und/oder Trivinylsiloxygruppen endgestopperte Diorgano(poly)siloxane eingesetzt. Für spezielle Anwendungen ist jedoch auch der Einsatz von nicht oder nur partiell gestopperten Diorgano(poly)siloxanen nötig.

Bevorzugte Diorgano(poly)siloxane entsprechen den allgemeinen Formeln 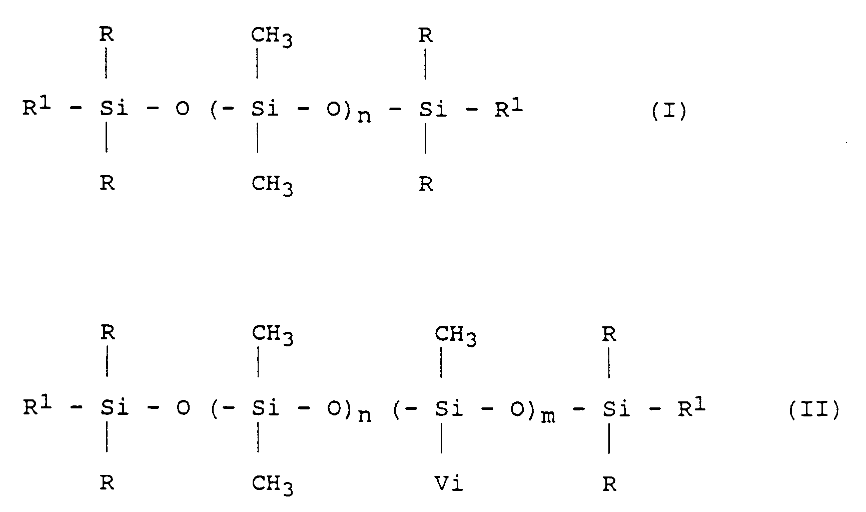
wobei R Methyl- und/oder Vinylrest und R¹ Methyl-, Vinyl- und/oder Hydroxylrest bedeuten und n innerhalb der Grenzen von 500 bis 10000, vorzugsweise von 2000 bis 8000, und n + m innerhalb der Grenzen von 500 bis 10000, vorzugsweise von 2000 bis 8000, liegen, mit der Maßgabe, daß der Quotient n/m größer oder gleich 1, vorzugsweise innerhalb der Grenzen von 3 bis 10000, ist.

Obwohl oben nicht angegeben, können die Diorgano(poly)siloxane neben Einheiten der Formel R₂SiO bis zu 0,05 Mol%, vorzugsweise weniger als 0,02 Mol%, andere, zumeist als mehr oder weniger schwer vermeidbare Verunreinigungen gegenwärtige Einheiten der Formel SiO_{4/2} und RSiO_{3/2} enthalten, wobei R ein Organorest, zumeist Methyl-, Ethyl-, Vinyl-, Phenyl- und/oder Trifluoralkylrest ist.

Die Herstellung dieser erfindungsgemäß verwendeten Diorgano(poly)siloxane ist allgemein bekannt. Eine Übersicht gebräuchlicher Herstellungsverfahren ist in Polymerreaktionen und reaktives Aufarbeiten in kontinuierlichen Maschinen VDI-Verlag GmbH, Düsseldorf 1988 auf den Seiten 211-224 gegeben.

Erfindungsgemäß feinteiliges Siliciumdioxid weist eine Stampfdichte (ISO 787/11) oberhalb 0,01 kg/l, vorzugsweise im Bereich von 0,02 bis 0,4 kg/l auf. Beispiele für feinteiliges Siliciumdioxid sind pyrogenes und/oder gefälltes Siliciumdioxid, die durch Behandlung beispielsweise mit Organosilanen, -silazanen oder -siloxanen oder durch Veretherung von Hydroxylgruppen zu Alkoxygruppen hydrophobiert sein können.

Besonders günstiges Einarbeitungsverhalten zeigt feinteiliges Siliciumdioxid, das gemäß der EP-A-0378785, auf die in diesem Zusammenhang ausdrücklich verwiesen wird, hergestellt wird. Hierbei handelt es sich um ein Verfahren zur Hydrophobierung von Si-OH-Gruppen enthaltendem Feststoff, dessen Stampfdichte zumeist kleiner als 0,1 kg/l ist, durch Umsetzung eines Hydrophobierungsmittels auf Basis von Organosiliciumverbindungen mit Si-OH-Gruppen enthaltendem, teilchenförmigem Feststoff unter gleichzeitiger mechanischer Beanspruchung des Reaktionsgemisches, das dadurch gekennzeichnet ist, daß 5 bis 50 Gew.-% des Si-OH-Gruppen enthaltenden, teilchenförmigen Feststoffes, bezogen auf das Gesamtgewicht der Reaktionsmischung, bestehend aus teilchenförmigem Feststoff und Hydrophobierungsmittel, eingesetzt werden. Ein bevorzugtes Hydrophobierungsmittel für dieses Verfahren besteht aus
70 bis 89 Gew.-% Hexamethyldisiloxan und/oder Trimethylsilanol,
10 bis 30 Gew.-% Hexamethyldisilazan und/oder Divinyltetramethyldisilazan und
1 bis 5 Gew.-% Wasser, wobei sich die Angaben in Gew.-% auf das Gesamtgewicht des Hydrophobierungsmittels beziehen.

Gleichermaßen von Vorteil kann eine Benetzung und Verdichtung von feinteiligem, hydrophilem Siliciumdioxid, dessen Stampfdichte kleiner als 0,1 kg/l ist, mit Diorgano(poly)siloxan und/oder niederviskosem Polymethylsiloxandiol, wie nachfolgend als Diorgano(poly)siloxan und/oder Strukturverbesserer beschrieben, auf Stampfdichten von vorzugsweise 0,03-0,5 kg/l, sein. Die Benetzung und daraus resultierende Erhöhung der Stampfdichte von feinteiligem Siliciumdioxid wird mit vorzugsweise 30 bis 100 %, insbesondere 50 bis 100 %, der in der Zusammensetzung der erfindungsgemäß hergestellten HTV-Siliconmassen vorhandenen Gewichtsteile, Strukturverbesserer vorgenommen. Die Temperatur ist hierbei vorzugsweise kleiner als 180C, insbesondere 10 bis 120°C.

Erfordert die Rezeptur den Einsatz von hydrophobem Siliciumdioxid, wird vorzugsweise hydrophobes Siliciumdioxid mit einem Kohlenstoffgehalt von mehr als 1 Gew.-%, bezogen auf das Gesamtgewicht hydrophoben Siliciumdioxids, insbesondere von 2 bis 8 Gew.-%, und Stampfdichten von größer als 0,05 kg/l, insbesondere 0,2 bis 0,4 kg/l, verwendet.

Weitere Beispiele für zu verwendende verstärkende Füllstoffe mit einer BET-Oberfläche (DIN 66131) von vorzugsweise mehr als 50 m²/g, sind feinteiliges hydrophiles oder hydrophobes Siliciumdioxid mit einer Stampfdichte kleiner als 0,1 kg/l, vorzugsweise 0,01 - 0,09 kg/l, Furnace-Ruß und Acetylen-Ruß. Bevorzugte Mengen dieser Stoffe sind 0 bis 60 Gewichtsteile.

Weiter können nicht verstärkende Füllstoffe wie Quarz, Diatomeenerde, Calciumsilikat, Zirkonsilikat, Zeolithe, Metalloxidpulver, wie Aluminium-, Titan-, Eisen-, oder Zinkoxid, Bariumsilikat, Bariumsulfat, Calciumcarbonat, Gips, und Kunststoffpulver wie Polyacrylnitrilpulver verwendet werden. Weitere Füllstoffe sind faserige Komponenten, wie Glasfasern und Kunststoffasern. Die BET-Oberfläche dieser Füllstoffe liegt in der Regel unter 50 m²/g.

Werden Strukturverbesserer eingesetzt, so sind dies vorzugsweise Polydimethylsiloxandiole mit einer Viskosität bei 25 °C von vorzugsweise 10 bis 200 mPas, insbesondere 20 bis 150 mPas. Sie können Phenylgruppen enthalten und insbesondere zur Beeinflussung der Härte des Vulkanisats können auch Vinylgruppen in der Kette dieser Polydimethylsiloxandiole vorhanden sein, wobei die Vinylgruppendichte über die Jodzahl (DIN 53241) erfaßt wird. Die Jodzahl beträgt vorzugsweise 1 bis 75 g Jod pro 100 g Siloxandiol, insbesondere 7 bis 70 g pro 100 g.

Die Herstellung dieser Polydimethylsiloxandiole ist allgemein bekannt und beispielsweise in A. Tomanek, Silicone und Technik, Hanser Verlag auf den Seiten 20 bis 22 beschrieben.

Falls erforderlich, werden auch Pigmente und Vernetzer vorzugsweise aus der Gruppe der Alkyl- bzw. Aroylperoxide eingearbeitet. Beispiele für Alkylperoxide sind Dicumylperoxid, Di-tert.-butylperoxid und 2,5-Di-tert.-butylperoxy-2,5-dimethylhexan. Beispiele für Aroylperoxide sind Benzoylperoxid, Bis(2.4-dichlorbenzoyl)peroxid und Bis(4-methylbenzoyl)peroxid.

Bevorzugte Zusammensetzungen der erfindungsgemäß hergestellten HTV-Siliconmassen sind wie folgt:
100 Gewichtsteile Diorgano(poly)siloxan
20 bis 200, vorzugsweise 30 bis 100, Gewichtsteile feinteiliges Siliciumdioxid mit einer Stampfdichte oberhalb 0,01 kg/l
0 bis 100, vorzugsweise 0 bis 60, Gewichtsteile weiterer Füllstoff
0 bis 30, vorzugsweise 0 bis 20, Gewichtsteile Strukturverbesserer
0 bis 7, vorzugsweise 0 bis 3, Gewichtsteile Vernetzer
0 bis 30, vorzugsweise 0 bis 10, Gewichtsteile weitere Additive
Für sämtliche oben genannte Bestandteile ist es möglich, Gemische von Einzelvertretern der jeweiligen Bestandteile zu verwenden.
So haben sich bei den Diorgano(poly)siloxanen für viele Anwendungen Zwei- bis Fünfkomponentensysteme besonders bewährt. Beispiele derartiger Gemische sind
25 - 100 Gewichtsteile Polymer oder Polymere der Formel II, wobei R Methyl- und R¹ Vinylreste sind, sowie n + m innerhalb der Grenzen von 2000 bis 8000 und n/m innerhalb der Grenzen von 200 bis 8000 liegen,
0 - 50 Gewichtsteile Polymer oder Polymere der Formel I, wobei R und R¹ Methylreste sind, sowie n innerhalb der Grenzen von 2000 bis 8000 liegt und
0 - 25 Gewichtsteile Polymer oder Polymere der Formel II, wobei R und R¹ Methylreste sind sowie n + m innerhalb der Grenzen von 500 bis 8000 und n/m innerhalb der Grenzen von 3 bis 50 liegen, mit der Maßgabe, daß die Summe der eingesetzten Mengen 100 Gewichtsteile beträgt.

Erfindungsgemäß werden Diorgano(poly)siloxane und feinteiliges Siliciumdioxid und gegebenenfalls weitere zu dosierende Komponenten in oszillierenden Einwellenpilgerschrittknetern (1) mit einer Gesamtlänge von vorzugsweise 10 bis 30 D (D = Schneckendurchmesser), insbesondere 12 bis 25 D, vermischt, homogenisiert und gegebenenfalls entgast, wobei die Drehzahl der Schnecken vorzugsweise 5-300 UpM, insbesondere 30 bis 300 UpM ist. Hierbei kann die Gesamtlänge als Mischzone verwendet werden, vorzugsweise gliedert sich diese jedoch in eine Misch- und eine Entgasungszone, wobei die Misch- und Entgasungszone beispielsweise durch eine Stauscheibe getrennt sind. Die Trennung der beiden Zonen ist jedoch auch durch zwei hintereinander geschaltete Pilgerschrittkneter möglich, wobei im ersten Kneter der Mischvorgang und im zweiten Kneter der Entgasungsvorgang stattfindet.

Derartige Pilgerschrittkneter sind in der Fachwelt auch als KO-Kneter (Ullmanns Encyklopädie der technischen Chemie, 4. Auflage, Band 2, Seite 296, Verlag Chemie, Weinheim/Bergstraße B.R.Deutschland) oder als Buss-Kneter (Buss-Kneader) bekannt. In diesen Pilgerschrittknetern kann das Mischgut während des gesamten Mischvorgangs durch Heizung oder Kühlung auf einem vorgegebenen Temperaturniveau gehalten werden.

Die erfindungsgemäß eingesetzten Diorgano(poly)siloxane werden entweder aus einem vorgeschalteten, kontinuierlichen Polymerreaktor (2), vorzugsweise ebenfalls einem Pilgerschrittkneter, entnommen und ohne weitere Zwischenlagerung der Mischzone des Einwellenpilgerschrittkneters zugeführt, wobei der Stoffstrom auf Grund der Dosiermengen der Reaktionskomponenten im Polymerreaktor bekannt und frei einstellbar ist, oder aus Vorratsbehältern, wie beispielsweise Zwischentanks, und geeigneten Dosiervorrichtungen, wie Flüssigkeitsdifferentialdosierwaagen, in die Mischzone vorzugsweise im Bereich von 0-4D, insbesondere 0-2D, des Einwellenpilgerschrittkneters gepumpt. Die Zuführung der Diorgano(poly)siloxane aus dem Polymerreaktor erfolgt vorzugsweise mit einem Förderorgan wie beispielsweise einer Austragsschnecke und/oder einer Zahnradpumpe (3), wobei das Diorgano(poly)siloxan vor dem Eintritt in den Einwellenpilgerschrittkneter vorzugsweise über einen Polymerkühler (4), wie beispielsweise einem Plattenkühler, geführt wird. Zur Vermeidung von Druckverlusten sollte hierbei der Abstand vom Förderorgan möglichst gering sein und vorzugsweise 10 m nicht übersteigen.

Falls erforderlich, können ein oder mehrere Diorgano(poly)siloxane aus kontinuierlichen Polymerreaktoren und/oder Vorratsbehältern, wie oben beschrieben, der Mischzone des Einwellenpilgerschrittkneters in einem geregelten zeitkonstanten Massenstrom zugeführt werden.

Das erfindungsgemäß verwendete Siliciumdioxid sowie gegebenenfalls weitere verstärkende oder nicht verstärkende Füllstoffe werden vorzugsweise über Differentialdosierwaagen (5) und/oder Einlaufhilfen in die Mischzone des Einwellenpilgerschrittkneters, vorzugsweise im Bereich von 0,5 bis 10D, insbesondere 2-8D, gegeben. Bei besonders bevorzugten Ausführungsformen erfolgt dies über zumindest zwei über diesen Bereich verteilte Dosierstellen. Als Einlaufhilfen kommen zylindrische oder konische Gefäße mit eingebauten rotierenden Wendeln oder Schnecken in Frage bzw. alternativ dazu ein- oder mehrwellige gleich- oder gegensinnig drehende Einlaufschnecken.

Wird Siliciumdioxid verwendet, das aus der Benetzung von feinteiligem, hydrophilem Siliciumdioxid mit Strukturverbesserer resultiert, so erfolgt diese Benetzung in kontinuierlichen oder diskontinuierlichen Schnellmischern (6).

Rezepturspezifisch kann die Einarbeitung von Strukturverbesserern in der Mischzone des Einwellenpilgerschrittkneters erforderlich sein. Dies erfolgt vorzugsweise über Dosierpumpen (7), wie Kolbenpumpen, Membranpumpen oder Zahnradpumpen, mit Durchflußmesser und Regelkreis. Vorzugsweise sollte die Strukturverbessererdosierung im Bereich der Polymerdosierstelle, vorzugsweise also im Bereich von 0-4D, erfolgen, insbesondere vor der Dosierung des erfindungsgemäß eingesetzten Siliciumdioxids und gegebenenfalls weiterer, verwendeter Füllstoffe.

Eine weitere gegebenenfalls angewandte Variante ist die Einspeisung des Strukturverbesserers ganz oder teilweise in die Mischzone bzw. in die Entgasungszone kurz vor dem Austragsorgan, vorzugsweise im Bereich von 5 bis 1D vor dem Austragsorgan, des Einwellenpilgerschrittkneters.

Rezepturspezifisch können weitere Additive dosiert werden. Zugabeort und Menge sind hierbei nicht kritisch, sie richten sich nach den Vorgaben der Rezeptur.

Die rezepturspezifisch dosierten Komponenten werden in der Misch- und Entgasungszone vermischt, homogenisiert und entgast. Die Temperaturführung hängt dabei von der jeweiligen Rezeptur ab. Von Vorteil ist es, wenn Misch- und Entgasungszone mit getrennten Temperierkreisläufen ausgestattet sind. Die Temperatur innerhalb des Einwellenpilgerschrittkneters beträgt vorzugsweise 20 bis 280°C, insbesondere 80 bis 220°C.

Die Entgasung wird vorzugsweise im Vakuum vorgenommen. Die Evakuierung erfolgt vorzugsweise mit Hilfe von Vakuumpumpen (8) wie Wasserringpumpen gegebenenfalls kombiniert mit Drehkolbenpumpen oder Strahlpumpen. Ein Arbeiten mit einem leichten Inertgasschleppstrom in der Misch- und/oder Entgasungszone ist ebenfalls möglich. Vorzugsweise wird dann Stickstoff als Inertgas verwendet.

Nach dem Mischen und Entgasen wird die Masse dem Produktaustrag zugeführt. Als Austragsorgan wird vorzugsweise eine Austragsschnecke oder eine Austragspumpe eingesetzt.

Vorzugsweise wird die Masse dann einer Siebvorrichtung, beispielsweise einem Siebkopf (9) mit automatischer Wechseleinrichtung zugeführt. Der hierfür erforderliche Druckaufbau erfolgt vorzugsweise mit Extrudern (10) oder Zahnradpumpen.

Die hieraus resultierende Masse wird vorzugsweise zur Kühlung auf Temperaturen von vorzugsweise kleiner oder gleich 100 °C, insbesondere 40 bis 100°C, einer kontinuierlichen Walzanlage (11), wie beispielsweise einem Scherwalzenextruder, zugeführt.

Falls rezepturspezifisch erforderlich, werden auf diesen Walzanlagen nach der Kühlung Vernetzer und/oder Pigmente und/oder weitere Additive eingearbeitet. Die Dosierung dieser Stoffe erfolgt vorzugsweise über Differentialdosierwaagen.

Die vorzugsweise auf 20 bis 90 °C abgekühlten Massen können schließlich vorzugsweise über Druckaufbaumaschinen, wie einem Einwellenextruder, mit anschließender Formgebung (12) in verkaufsfertige Ware überführt werden.

Obwohl oben nicht explizit angegeben, können im erfindungsgemäßen Verfahren verwendete Anlagen weitere, an sich bekannte Bestandteile enthalten, wie Dosier- und andere Fördereinrichtungen, Meß- und Regeleinrichtungen, beispielsweise für Druck, Temperatur und Volumenströme, Ventile, übliche zur Entgasung und Kühlung benötigte Teile, Förder- und Verpackungseinrichtungen, Vorrichtungen zum Beaufschlagen des Guts mit Inertgas, sowie Vorrichtungen zum Trocknen solcher Gase.

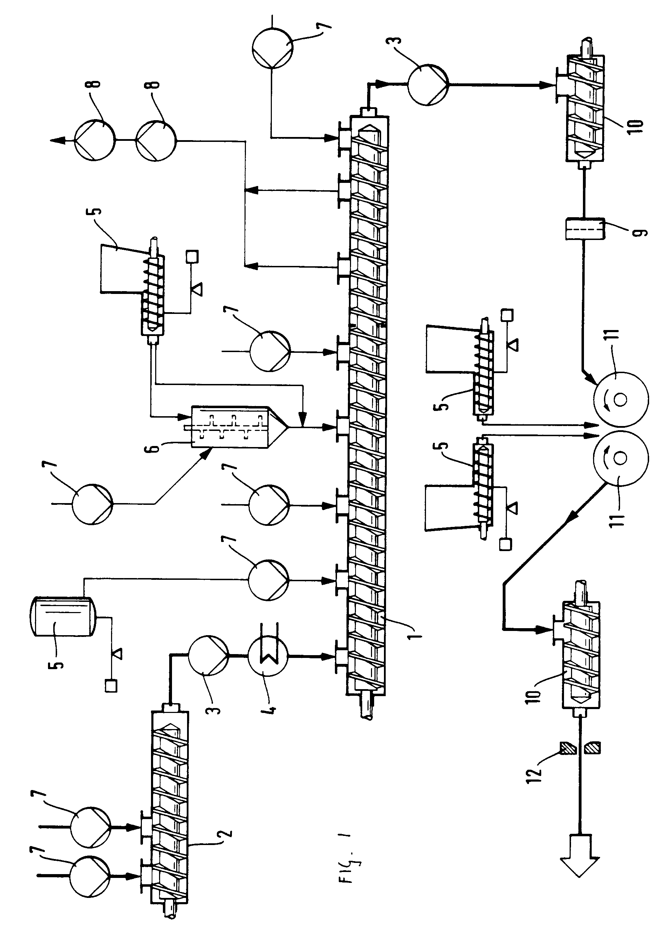

Eine Ausführungsform des erfindungsgemäßen Verfahren ist in der Figur skizziert, wobei die dort aufgeführten Anlagenteile einen Gesamtüberblick einer zu verwendenden Anordnung geben sollen. Je nach dem rezepturspezifisch erforderlichen Dosierungen können natürlich die ggf. nicht benötigten Teile weggelassen bzw. Teile durch gleichwirkende Vorrichtungen ersetzt sein.

In der Figur bedeuten:
- 1.: Einwellenpilgerschrittkneter
- 2.: Polymerreaktor
- 3.: Austragschnecke/Austragpumpe
- 4.: Polymerkühler
- 5.: Differentialdosierwaage
- 6.: Schnellmischer
- 7.: Dosierpumpe
- 8.: Vakuumpumpe
- 9.: Siebkopf
- 10.: Extruder
- 11.: Walzanlage
- 12.: Formgebung

### Beispiel

Ein oszillierender Einwellenpilgerschrittkneter (Typ PR 140, Verfahrenslänge 15D) wurde über eine Zahnradpumpe und eine für hochviskose Medien geeignete Differentialdosierwaage mit Diorganopolysiloxan beschickt. Das Polymer ist über die folgende Formel charakterisiert: 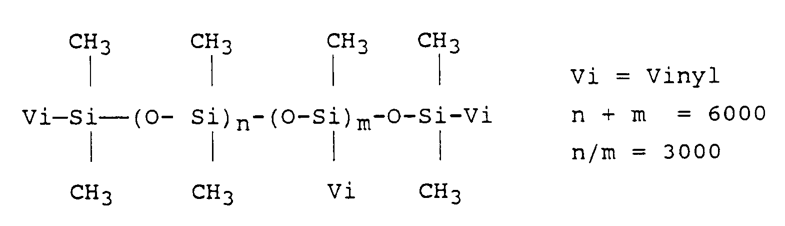 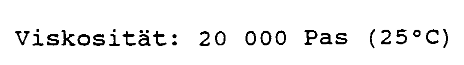
Der Kneter wurde auf 150°C temperiert und die Drehzahl der Schnecke auf 100 UpM eingestellt. Nach einer Vormischstrecke für das Polymer von ca. 2 D wurde auf einer Verfahrenslänge von weiteren 2 D über eine Pulverdifferentialdosierwaage feinteilige hydrophobe Kieselsäure dosiert. Gesamtdosiermenge: 30 kg/h. Die Stampfdichte der Kieselsäure beträgt 0,30 kg/l. Die zudosierte Kieselsäure wurde über 11 D mit dem Polymer homogenisiert und anschließend über eine Zahnradpumpe ausgetragen. Die Massetemperatur (Austritt Pilgerschrittkneter) lag während des Versuchs (Dauer: 3 h) bei 185°C, sie unterlag nur geringen Schwankungen im Bereich von 183-187°C. Das Produkt konnte durch folgende Eigenschaften charakterisiert werden.

| | Probe nach | | |
|---|---|---|---|
| | 1 Stunde | 2 Stunden | 3 Stunden |
| Aussehen | homogen und transparent | | |
| Stippenbeurteilung | gut | gut | gut |
| Mooneyviskosität DIN 53523 | 38 | 39 | 37 |
| Shore Härte A * DIN 53505 | 48 | 49 | 48 |

| | | | |
|---|---|---|---|
| * Nach Vulkanisation bei 165° C (15 Min) und anschließender Temperung bei 200°C (4 h). Vernetzer: Dicumylperoxid | | | |

Gesamtbeurteilung: Positive Produkteigenschaften und unproblematischer Versuchsablauf.

### Vergleichsbeispiel

Analog dem Beispiel wurde ein Vergleichsversuch auf einem Doppelschneckenextruder (Typ Kestermann, K 86) gefahren. Einsatzstoffe und Durchsatzmengen glichen denen aus dem Beispiel, identisch waren die Dosieraggregate und die Zahnradpumpe für den Produktaustrag. Die Vormischstrecke für das Polymer betrug ca. 5 D, die Kieselsäure wurde anschließend über eine Verfahrenslänge von ca. 2 D dem Kneter zugeführt. Weitere 13 D dienten zur Homogenisierung des Füllstoffes im Polymer.
Schneckendurchmesser: 80 mm, Verfahrenslänge: 20 D,
Temperierung von Gehäuse und Schnecke: 150°C
Drehzahl: 40 UpM
Die Massetemperatur lag während des Versuchs (Dauer: 3 h) bei 182-194°C mit Spitzen bis zu 210° C. Das Produkt kann durch folgende Eigenschaften charakterisiert werden.

| | Probe nach | | |
|---|---|---|---|
| | 1 Stunde | 2 Stunden | 3 Stunden |
| Aussehen | homogen/transparent leichte Dunkelfärbung | nicht ganz homogen/transparent | homogen/transparent Dunkelfärbung |
| Stippenbeurteilung | mittel | mittel | mittel/schlecht |
| Mooneyviskosität, DIN 53523 in ML(1+4), 23°C | 35 | 40 | 37 |
| Shore Härte A, DIN 53505 | 47 | 50 | 47 |

| | | | |
|---|---|---|---|
| * Nach Vulkanisation bei 165°C (15 Min) und anschließender Temperung bei 200°C (4 h). Vernetzer: Dicumylperoxid | | | |

### Gesamtbeurteilung:

Auf Grund des wechselnden Einzugsverhaltens der Zweiwellenmaschine resultierten zeitlich nicht konstante Produkteigenschaften. Zudem deutet die Stippenbeurteilung auf die Notwendigkeit einer deutlich größeren Verfahrenslänge. Die Produktverfärbung resultiert augenscheinlich aus dem Verschleiß an der Zweiwellenmaschine vorwiegend durch Reibung an den Schneckenstegen und der Zylinderwand.

## Patentansprüche

1. Verfahren zur kontinuierlichen Herstellung von HTV-Siliconmassen aus 100 Gewichtsteile Diorgano(poly)siloxan, das bei 25 °C eine Viskosität von 50 bis 100000 Pas aufweist, und zumindest 20 Gewichtsteilen feinteiligem Siliciumdioxid, das ein Stampfdichte oberhalb 0,01 Kg/l aufweist, dadurch gekennzeichnet, daß die Komponenten in einem oszillierenden Einwellenpilgerschrittkneter vermischt und homogenisiert werden.

2. Verfahren nach Anspruch 1, dadurch gekennzeichnet, daß die erhaltenen unvernetzten HTV-Siliconmassen eine Mooney-Viskosität von 15 - 130 Mooney-Einheiten aufweisen.

3. Verfahren nach Anspruch 1 oder 2, dadurch gekennzeichnet, daß Diorgano(poly)siloxan mit einer Viskosität von 500 - 50000 Pas bei 25°C verwendet wird.

4. Verfahren nach einen oder mehreren der Ansprüche 1 - 3, dadurch gekennzeichnet, daß als feinteiliges Siliciumdioxid pyrogenes und/oder gefälltes Siliciumdioxid verwendet wird.

5. Verfahren nach einem oder mehreren der Ansprüche 1 - 4, dadurch gekennzeichnet, daß die HTV-Siliconmassen folgende Zusammensetzung aufweisen:
100 Gewichtsteile Diorgano(poly)siloxan
20 bis 200 Gewichtsteile feinteiliges Siliciumdioxid mit einer Stampfdichte oberhalb 0,01 kg/l
0 bis 100 Gewichtsteile weiterer Füllstoff
0 bis 30 Gewichtsteile Strukturverbesserer
0 bis 7 Gewichtsteile Vernetzer
0 bis 30 Gewichtsteile weitere Additive

6. Verfahren nach einem oder mehreren der Ansprüche 1 - 5, dadurch gekennzeichnet, daß der Einwellenpilgerschrittkneter eine Gesamtlänge von 10 bis 30 D (D = Schneckendurchmesser) aufweist.

7. Verfahren nach einem oder mehreren der Ansprüche 1 - 6, dadurch gekennzeichnet, daß das Diorgano(poly)siloxan im Bereich von 0 bis 4 D und das feinteilige Siliciumdioxid im Bereich von 0,5 bis 10 D des Einwellenpilgerschrittkneters dosiert wird.

8. Verfahren nach einem oder mehreren der Ansprüche 1 - 7, dadurch gekennzeichnet, daß die Temperatur innerhalb des Einwellenpilgerschrittkneters 20 bis 280°C beträgt.

9. Verfahren nach einem oder mehreren der Ansprüche 1 - 8, dadurch gekennzeichnet, daß die den Einwellenpilgerschrittkneter verlassende Masse nach erfolgtem Druckaufbau über eine Siebvorrichtung einer kontinuierlichen Walzanlage zur Kühlung auf Temperaturen von kleiner als 100°C zugeführt wird, auf der ggf. auch Vernetzer und/oder Pigmente und/oder Additive einarbeitbar sind.

10. Verfahren zur kontinuierlichen Herstellung von HTV-Siliconmassen nach Anspruch 1, dadurch gekennzeichnet, daß die den Kneter verlassende Masse nach erfolgtem Druckaufbau über eine Siebvorrichtung einer kontinuierlichen Walzanlage zur Kühlung auf Temperaturen von kleiner als 100°C zugeführt wird, auf der ggf. auch Vernetzer und/oder Pigmente und/oder Additive einarbeitbar sind.

## Claims

1. Process for the continuous preparation of an HTV silicone composition of 100 parts by weight of diorgano(poly)siloxane which has a viscosity of 50 to 100,000 Pas at 25°C and at least 20 parts by weight of finely divided silicon dioxide which has a tamped density of more than 0.01 kg/l characterized in that the components are mixed and homogenised in an oscillating single-shaft pilgrim-step kneader.

2. Process according to Claim 1, characterised in that the non-crosslinked HTV silicone composition obtained has a Mooney viscosity of 15 - 130 Mooney units.

3. Process according to Claim 1 or 2, characterised in that a diorgano(poly)siloxane having a viscosity of 500 - 50,000 Pas at 25°C is used.

4. Process according to one or more of Claims 1 - 3, characterised in that pyrogenic and/or precipitated silicon dioxide is used as the finely divided silicon dioxide.

5. Process according to one or more of Claims 1 - 4, characterised in that the HTV silicone composition has the following formulation:
100 parts by weight of diorgano(poly)siloxane,
20 to 200 parts by weight of finely divided silicon dioxide having a tamped density of more than 0.01 kg/l,
0 to 100 parts by weight of other filler,
0 to 30 parts by weight of anti-structure agent,
0 to 7 parts by weight of crosslinking agent and
0 to 30 parts by weight of other additives.

6. Process according to one or more of Claims 1 - 5, characterised in that the single-shaft pilgrim-step kneader has a total length of 10 to 30 D (D = screw diameter).

7. Process according to one or more of Claims 1 - 6, characterised in that the diorgano(poly)siloxane is metered in over the region of 0 to 4 D and the finely divided silicon dioxide is metered in over the region of 0.5 to 10 D of the single-shaft pilgrim-step kneader.

8. Process according to one or more of Claims 1 - 7, characterised in that the temperature within the single-shaft pilgrim-step kneader is 20 to 280°C.

9. Process according to one or more of Claims 1 - 8, characterised in that the composition which leaves the single-shaft pilgrim-step kneader is fed, after pressure build-up has taken place, via a sieving device to a continuous roll unit for cooling to temperatures of less than 100°C, at which crosslinking agents and/or pigments and/or additives can also be incorporated if appropriate.

10. Process for the continuous preparation of HTV silicone compositions according to Claim 1, characterised in that the composition which leaves the kneader is fed, after pressure build-up has taken place, via a sieving device to a continuous roll unit for cooling to temperatures of less than 100°C, at which crosslinking agents and/or pigments and/or additives can also be incorporated if appropriate.

## Revendications

1. Procédé de fabrication en continu de matières de silicones HTV, procédé caractérisé en ce que, en opérant dans un malaxeur à pas de pèlerin oscillant à un bras, on mélange et on homogénéise 100 parties en poids d'un diorgano(poly)siloxane ayant une viscosité de 50 à 100 000 Pas à la température de 25°C, avec au moins 20 parties en poids de dioxyde de silicium finement divisé ayant une densité après damage supérieure à 0,01 kg/l.

2. Procédé selon la revendication 1, caractérisé en ce que les matières de silicones HTV non-réticulées obtenues ont une viscosité Mooney de 15 à 130 unités Mooney.

3. Procédé selon la revendication 1 ou 2, caractérisé en ce que le diorgano(poly)siloxane employé a une viscosité de 500 à 50 000 PaS à la température de 25°C.

4. Procédé selon une ou plusieurs des revendications 1 à 3, caractérisé en ce que l'on utilise un dioxyde de silicium finement divisé de pyrogénation et/ou de précipitation.

5. Procédé selon une ou plusieurs des revendications 1 à 4, caractérisé en ce que les silicones HTV ont la composition suivante, en proportions pondérales :
100 parties du diorgano(poly)siloxane
20 à 200 parties de dioxyde de silicium finement divisé d'une densité (masse volumique) après damage supérieure à 0,01 kg/l
0 à 100 parties d'autres charges,
0 à 30 parties d'agents améliorant la structure,
0 à 7 parties d'agents réticulants et
0 à 30 parties d'autres additifs.

6. Procédé selon une ou plusieurs des revendications 1 à 5, caractérisé en ce que le malaxeur a une longueur totale de 10 à 30 D, D étant le diamètre de la vis.

7. Procédé selon une ou plusieurs des revendications 1 à 6, caractérisé en ce que l'on dose le diorgano(poly)-siloxane dans l'intervalle de 0 à 4 D du malaxeur et le dioxyde de silicium finement divisé dans l'intervalle de 0,5 à 10 D.

8. Procédé selon une ou plusieurs des revendications 1 à 7, caractérisé en ce que la température à l'intérieur du malaxeur est de 20 à 280°C.

9. Procédé se don une ou plusieurs des revendications 1 à 8, caractérisé en ce que la masse sortant du malaxeur est conduite après mise en pression, en passant par un dispositif de tamisage, à des rouleaux continus, pour être refroidie à une température inférieure à 100°C, rouleaux sur lesquels on peut aussi éventuellement faire entrer des réticulants et/ou des pigments et/ou des additifs.

10. Procédé de fabrication en continu de matières de silicones HTV selon la revendication 1, procédé caractérisé en ce que la masse sortant du malaxeur est conduite après mise en pression , en passant par un dispositif de tamisage, à des rouleaux continus, pour être refroidie à une température inférieure à 100°C, rouleaux sur lesquels on peut aussi éventuellement faire entrer des réticulants et/ou des pigments et/ou des additifs.
